# EUROPÄISCHE PATENTANMELDUNG

(11) **EP 1 223 285 A2**
(43) Veröffentlichungstag der Anmeldung: **17.07.2002**
(21) Anmeldenummer: 01130387.2
(22) Anmeldetag: 20.12.2001
(51) Int. Cl.: E05F 15/10, E05F 15/12

(54) **Elektrischer Antrieb**

(30) Priorität: 15.01.2001 DE 10101704
(71) Anmelder: GEZE GmbH, 71229 Leonberg (DE)
(72) Erfinder: Hucker, Matthias, Dr., 76359 Marxzell (DE); Hahn, Erhard, 71379 Leutenbach (DE)

(57) **Zusammenfassung**

Die Erfindung betrifft ein Verfahren, eine Anordnung und ein Programmprodukt für eine Datenverarbeitungsanlage zur Authentisierung einer Person mittels Handerkennung. Die Handerkennung wird auf Basis der für eine erste Position und für einen Übergang in eine zweite Position gewonnenen Abtastdaten durchgeführt.

## Beschreibung

Die Erfindung betrifft einen elektrischen Antrieb für einen beweglich an einem ortsfesten Bauteil gelagerten Flügel, mit den Merkmalen des Oberbegriffs des Anspruchs 1.

Derartige Antriebe sind seit langem bekannt. Sie weisen ein Antriebsgehäuse auf, in welchem ein elektrischer Antriebsmotor angeordnet ist. Im Antriebsgehäuse ist eine elektronische Steuerung angeordnet, welche mit dem Antriebsmotor zusammenwirkt. Ein Abtriebsglied tritt aus einer Öffnung des Antriebsgehäuses aus und ist direkt oder indirekt mit dem beweglichen Flügel kraftschlüssig verbunden, vorzugsweise unter Zwischenschaltung eines Getriebes zwischen dem Antriebsmotor und dem Abtriebsglied.

Die Ansteuerung derartiger Antriebe erfolgt über das Anlegen der Versorgungsspannung, z.B. über Taster oder Schalter. Nachteilig ist hierbei, dass somit die Zuordnung bestimmter Ansteuerelemente zu bestimmten Antrieben fest vorgegeben ist.

Sollen Statussignale (z.B. "Flügel offen", "Flügel schließt", etc.) entfernt vom Antrieb angezeigt werden, sind zusätzliche Leitungen zur Übertragung dieser Signale erforderlich. Nachteilig sind hierbei der große Verkabelungsaufwand als zusätzlicher Zeitaufwand sowie auch die Vielzahl der zu anzuschließenden Leitungen, die eventuell zu Verwechslungen und somit zu fehlerhaftem Anschluss des Antriebs führen kann.

Stand der Technik ist ein derartiger herkömmlicher Antrieb, der über ein separates Schnittstellenelement an ein Bussystem angekoppelt ist. Es können dann zwar einige Vorteile des Betriebes der Antriebe über das Bussystem genutzt werden (z.B. eine wesentliche Verringerung des Verkabelungsaufwands sowie eine flexible Zuordnung der Ansteuerelemente zu den Antrieben); nachteilig ist jedoch, dass bei dieser Anwendungsform keine Rückmeldung von Betriebsstati an antriebsferne Anzeigeelemente möglich ist und dass das Schnittstellenelement - aufgrund seiner separaten Anordnung außerhalb des Antriebsgehäuses - bei bestimmten Platzverhältnissen am Einbauort des Antriebs schwer zu montieren ist und zudem auch den optischen Eindruck des Antriebs stört. Insbesondere müssen hier auch die bei der Inbetriebnahme des Antriebs durchzuführenden Einstellungen direkt beim Antrieb durchgeführt werden, was bei bestimmten ungünstigen Platzverhältnissen die Inbetriebnahme erschwert.

Der Erfindung liegt die Aufgabe zugrunde, einen gattungsgemäßen Antrieb derart zu verbessern, dass er ohne großen Verkabelungsaufwand montierbar sowie komfortabel betreibbar ist.

Diese Aufgabe löst die Erfindung mit dem Gegenstand des Anspruchs 1.

Komfortabel ist ein derartiger Antrieb dann, wenn er z.B. eine flexible Zuordnung mehrerer Ansteuerelemente zu mehreren Antrieben aufweist und/oder mit der Möglichkeit zur antriebsfernen Anzeige einer Vielzahl von Betriebsstati, ohne die vorangehend beschriebenen Nachteile aufzuweisen.

Der erfindungsgemäße Antrieb ist zum Anschluss an ein Bussystem ausgebildet, indem die Busschnittstelle innerhalb des Antriebsgehäuses integriert angeordnet ist, so dass der Antrieb über eine Steck- oder Schraubverbindung auf einfache Weise, d.h. ohne die Montage zusätzlicher Komponenten, an das Bussystem anschließbar ist.

Das Bussystem kann als EIB (Europäischer Installationsbus) ausgebildet sein. Dieses Bussystem ist insbesondere auch bei kleineren Gebäuden nutzbar und bewirkt hier - bei einen wesentlich geringeren Aufwand bei der Verkabelung der im Gebäude vorhandenen elektrischen Systeme - einen flexiblen und komfortablen Betrieb dieser Systeme. Es ist alternativ jedoch auch die Verwendung jedes anderen bekannten Bussystems denkbar.

Über das Bussystem kann sowohl die Ansteuerung des Antriebs als auch die Anzeige der Betriebsstati erfolgen.

Insbesondere ist es bei der Verwendung mehrerer Antriebe in Verbindung mit mehreren Ansteuerelementen möglich, dass die Zuordnung der Ansteuerelemente zu den Antrieben flexibel erfolgen kann; d.h., dass z.B. einzelne Ansteuerelemente jeweils bestimmten einzelnen Antrieben zugeordnet sind und außerdem über weitere Ansteuerelemente mehrere der Antriebe als Gruppe ansteuerbar sind. Insbesondere ist es hierbei auch möglich, diese Zuordnungen flexibel zu ändern.

Die Betriebsstati können über das Bussystem zu diversen antriebsfern angeordneten Anzeigeelementen weitergeleitet und dort angezeigt werden. Insbesondere ist hier die zentrale Anzeige aller Betriebsstati mehrerer Antriebe in einem übergeordneten zentralen Leitsystem denkbar.

Ferner ist es durch den Anschluss des Antriebs an ein Bussystem möglich, den Antrieb in weitere gebäudeseitig angeordnete Systeme einzubinden, z.B. ist ein mit dem Antrieb angetriebener Fensterflügel zur Lüftung nutzbar und zugleich - über das Bussystem mit Rauch- oder Wärmesensoren gekoppelt - auch als Rauch- und Wärmeabzugsanlage betreibbar. Alternativ oder zusätzlich kann der Antrieb über das Bussystem z.B. auch an Einbruchmeldeanlagen angekoppelt werden. Ein unberechtigtes Bewegen des Flügels kann z.B. durch den Bewegungsgeber der Abtriebswelle des Antriebsmotors oder durch andere Sensoren am Antrieb erkannt werden und über das Bussystem an die Einbruchmeldeanlage gemeldet werden.

Der Antrieb kann außerdem zusätzliche Anschlüsse für konventionelle Ansteuerelemente (z.B. Schalter oder Taster) und/oder für konventionelle Anzeigeelemente (z.B. Glühlampen oder LEDs) aufweisen, so dass der Antrieb auch in herkömmlicher Weise mit diesen konventionellen Ansteuerelementen betreibbar ist. Dies kann z.B. Vorteile bringen, wenn der Antrieb in ein Gebäude ohne vorhandenes Bussystem eingebaut wird, die Nachrüstung eines Bussystems aber schon geplant ist; der Antrieb ist dann mit allen bei Anschluss an ein Bussystem geplant ist; der Antrieb ist dann mit allen bei Anschluss an ein Bussystem auftretenden Vorteilen weiterbetreibbar.

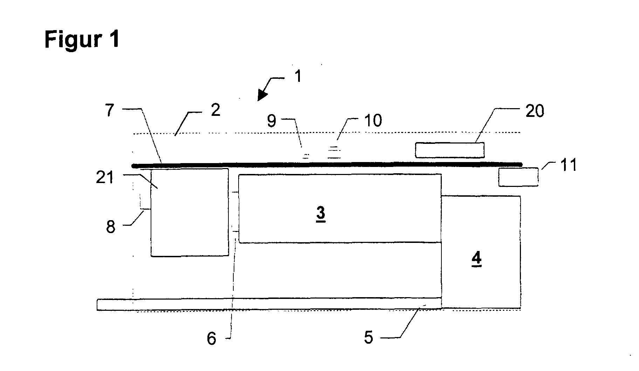

Nachfolgend wird ein Ausführungsbeispiel anhand der Figur 1 näher erläutert. Dabei zeigt die **Figur 1** eine von oben betrachtete Schnittdarstellung eines erfindungsgemäßen Antriebs für einen Fensterflügel.

Der Antrieb 1 weist ein Antriebsgehäuse 2 auf. Innerhalb des Antriebsgehäuses 2 ist ein elektrischer Antriebsmotor 3 angeordnet, welcher über ein zwischengeschaltetes Getriebe 4 mit einem als Schubstange ausgebildeten Abtriebsglied 5 zusammenwirkt. Eine Bewegung des Antriebsmotors 3 bewirkt somit durch die Ankopplung des Abtriebsglieds 5 an den nicht dargestellten Fensterflügel eine entsprechende Bewegung des Flügels.

Ebenfalls innerhalb des Gehäuses 2 ist eine einen Mikroprozessor aufweisende elektronische Steuerung 7 angeordnet.

Auf der Abtriebswelle des Antriebsmotors 3 ist drehfest ein Drehgeber 6 angeordnet, welcher beispielsweise als Inkrementalgeber ausgebildet ist. Der Drehgeber 6 erfasst die Drehbewegung der Abtriebswelle des Antriebsmotors 3 und leitet ein dieser Drehbewegung entsprechendes elektrisches Signal an die Steuerung 7. Durch entsprechender Ausgestaltung des Drehgebers 6 zeigt dieses elektrische Signal sowohl die Drehzahl als auch die Drehrichtung der Abtriebswelle des Antriebsmotors 3 an.

Die Versorgungsspannung wird dem Antrieb 1 über den im Antriebsgehäuse 2 befindlichen Anschluss 11 zugeführt. Die Versorgungsspannung ist als Wechselspannung 230 V, 50 Hz ausgebildet. Innerhalb des Gehäuses 2 des Antriebs 1 ist ein nicht dargestelltes Netzteil vorhanden, welches für die Steuerung 7 und für den Antriebsmotor 3 sowie für weitere elektrische Verbraucher des Antriebs 1 die jeweils passende Betriebsspannung zur Verfügung stellt. Die Versorgungsspannung kann bei alternativen Ausführungsbeispielen auch als Wechselspannung abweichender Spannung und/oder Frequenz oder als Gleichspannung (z.B. 12 V) ausgebildet sein; im letzten Fall kann somit das Netzteil entfallen.

Die Busschnittstelle 8 ist ebenfalls integriert innerhalb des Gehäuses 2 angeordnet; sie dient zur Verbindung der Steuerung 7 mit dem Bussystem. In der Außenwandung des Gehäuses 2 ist eine Anschlussbuchse 20 zum Anschluss des Antriebs 1 an das Bussystem angeordnet; der Anschluss erfolgt in Form einer Steckoder Schraubverbindung. Durch diese einfache Verbindungsart ist eine ordnungsgemäße Ausführung des Anschlusses wesentlich erleichtert; vorteilhafterweise ist der Anschluss des Antriebs (1) an das Bussystem mit einem einzigen Handgriff herstellbar. Die Anschlussbuchse 20 kann außerdem so ausgebildet sein, dass nur eine eindeutige Verbindung möglich ist und somit falsche Verbindungen, z.B. Vertauschen der Pole) grundsätzlich ausgeschlossen sind.

Über das Bussystem kann die Spannungsversorgung der Steuerung sowie ggf. weiterer elektrischer Komponenten des Antriebs erfolgen. Zusätzlich kann eine separate Spannungsversorgung, z.B. für den Antriebsmotor, vorgesehen sein.

In der Außenwandung des Antriebsgehäuses 2 sind außerdem nicht dargestellte, als Steck- oder Schraubverbindung ausgebildete Anschlüsse für herkömmliche Ansteuerelemente (Schalter oder Taster) angeordnet. Über diese Anschlüsse lässt sich der Antrieb direkt, d.h. ohne Verwendung eines Bussystems, über die herkömmlichen Ansteuerelemente betreiben.

Da eine feste Kopplung zwischen der Antriebswelle des Antriebsmotors 3 und dem Fensterflügel besteht, ergeben sich somit vielfältige Anwendungsmöglichkeiten: So ist es z.B. möglich, die Endstellungen ("Offen" und "Geschlossen") des Fensterflügels mit einer sogenannten "Lernfahrt" nach Montage des Antriebs 1 zu ermitteln und in der Steuerung 7 zu speichern. Auch jede Zwischenposition des Fensterflügels ist über den Drehgeber 6 direkt erfassbar und ggf. in der Steuerung 7 speicherbar.

Durch im Antriebsgehäuse 2 angeordnete Anzeige- und Eingabeelemente 9, 10 sind Betriebsstati und Betriebsmodi direkt am Antrieb 1 anzeigbar und einstellbar. Durch Drücken der Programmiertaste 10 sind beispielsweise manuell Betriebsmodi des Antriebs 1 einstellbar, z.B. jeweils durch eine definierte Abfolge von Druckimpulsen. Die Anzeige-LED 9 zeigt, z.B. durch definierte Abfolgen von Blinksignalen oder durch verschiedene Farben, die jeweiligen Betriebsstati bzw. Betriebsmodi des Antriebs 1 an. Beispielsweise kann durch Drücken der Programmiertaste 10 die sogenannte "Lernfahrt" des Antriebs 1 gestartet werden, wobei sich der Antrieb 1 mit geringer Geschwindigkeit zwischen seinen Endstellungen bewegt. Die Endstellungen des Antriebs 1 werden beispielsweise durch eine Erhöhung des Motorstroms erkannt und abhängig vom entsprechenden Signal des Drehgebers 6 in der Steuerung 7 gespeichert. Durch den Anschluss des Antriebs 1 an das Bussystem sind diese Handlungen und Anzeigen auch entfernt vom Antrieb 1 möglich. Dies kann insbesondere vorteilhaft sein, wenn der Antrieb in einer schwer zugänglichen Position montiert ist. Das Bussystem kann hierzu eine Schnittstelle (z.B. RS232) zum Anschluss von PCs oder anderen Eingabeund Anzeigegeräten aufweisen.

### Liste der Referenzzeichen:

- 1: Antrieb
- 2: Gehäuse
- 3: Antriebsmotor
- 4: Getriebe
- 5: Abtriebsglied
- 6: Drehgeber
- 7: Steuerungs-Platine
- 8: Motor-Kondensator
- 9: Anzeige-LED
- 10: Programmiertaste
- 11: Versorgungsspannungsanschluss
- 20: Bus-Anschlussbuchse
- 21: Bus-Schnittstellenplatine

## Patentansprüche

1. Antrieb (1) für einen beweglich an einem ortsfesten Bauteil gelagerten Flügel,
wobei der Antrieb (1) ein Antriebsgehäuse (2) ausweist, und
mit einem im Antriebsgehäuse (2) angeordneten elektrischen Antriebsmotor (3),
mit einer im Antriebsgehäuse (2) angeordneten elektronischen Steuerung (7),
mit einem Abtriebsglied (5), welches aus einer Öffnung des Antriebsgehäuses (2) austritt und direkt oder indirekt mit dem beweglichen Flügel kraftschlüssig verbunden ist, und
mit einem zwischen dem Antriebsmotor (3) und dem Abtriebsglied (5) geschalteten Getriebe (4),
wobei der Antrieb (1) eine elektrische Verbindung zu einem Bussystem aufweist,
**dadurch gekennzeichnet,**
**dass** der Antrieb (1) eine im Antriebsgehäuse (2) integriert angeordnete Schnittstelle (8) zum Anschluss an ein Bussystem umfasst.

2. Antrieb nach Anspruch 1,
**dadurch gekennzeichnet, dass** sowohl die Ansteuerung des Antriebs (1) als auch die Anzeige von Betriebsstati des Antriebs (1) über das Bussystem erfolgt.

3. Antrieb nach Anspruch 2,
**dadurch gekennzeichnet, dass** Ansteuerelemente vorhanden sind, welche zur Ansteuerung des Antriebs (1) über das Bussystem ausgebildet sind.

4. Antrieb nach Anspruch 3,
**dadurch gekennzeichnet, dass** die Zuordnung der Ansteuerelemente zum Antrieb (1) über das Bussystem einstellbar ist.

5. Antrieb nach Anspruch 2,
**dadurch gekennzeichnet, dass** Anzeigeelemente vorhanden sind, welche zur Anzeige von Betriebszuständen und/oder Statussignalen des Antriebs (1) über das Bussystem ausgebildet sind.

6. Antrieb nach Anspruch 1,
**dadurch gekennzeichnet, dass** die Schnittstelle (8) zum Anschluss an ein EIB-Bussystem ausgebildet ist.

7. Antrieb nach Anspruch 1,
**dadurch gekennzeichnet, dass** die Spannungsversorgung der Steuerung (7) und ggf. weiterer elektrischer Komponenten des Antriebs (1) über das Bussystem erfolgt.

8. Antrieb nach Anspruch 1,
**dadurch gekennzeichnet, dass** der Antrieb (1) einen Anschluss (20) aufweist, mit dem die Schnittstelle (8) an das Bussystem anschließbar ist.

9. Antrieb nach Anspruch 8,
**dadurch gekennzeichnet, dass** der Anschluss (20) als Steckverbindung oder als Schraubverbindung ausgebildet ist.

10. Antrieb nach Anspruch 8 oder 9,
**dadurch gekennzeichnet, dass** der Anschluss (20) verpolungssicher ausgebildet ist.

11. Antrieb nach Anspruch 1,
**dadurch gekennzeichnet, dass** der Antrieb (1) über das Bussystem an ein zentrales Leitsystem anschließbar ist.

12. Antrieb nach Anspruch 1,
**dadurch gekennzeichnet, dass** der Antrieb (1) über das Bussystem an eine Einbruchmeldeanlage anschließbar ist.

13. Antrieb nach Anspruch 1,
**dadurch gekennzeichnet, dass** der Antrieb (1) über das Bussystem an eine Inbetriebnahmeeinrichtung, z.B. einen PC, anschließbar ist.

14. Antrieb nach Anspruch 1,
**dadurch gekennzeichnet, dass** der Antrieb (1) über das Bussystem an eine Einrichtung zur Datenfernübertragung, z.B. ein Modem, anschließbar ist.

15. Antrieb nach Anspruch 1,
**dadurch gekennzeichnet, dass** der Antrieb (1) zusätzliche Anschlüsse für als Unterbrecher ausgebildete Taster und/oder Schalter aufweist.

16. Antrieb nach Anspruch 1,
**dadurch gekennzeichnet, dass** der Antrieb (1) zusätzliche Anschlüsse für Anzeigeelemente aufweist.

17. Antrieb nach den Ansprüche 15 und 16,
**dadurch gekennzeichnet, dass** der Antrieb (1) über die Taster bzw. Schalter und/oder über die Anzeigeelemente ohne den Anschluss an das Bussystem betreibbar ist.
